# EUROPÄISCHE PATENTANMELDUNG

(11) **EP 4 431 975 A1**
(43) Veröffentlichungstag der Anmeldung: **18.09.2024**
(21) Anmeldenummer: 24155030.0
(22) Anmeldetag: 31.01.2024
(51) Int. Cl.: G01S 7/481, G01S 7/4863, G01S 17/894

(54) **OPTOELEKTRONISCHER SENSOR**

(30) Priorität: 15.03.2023 DE 102023106439; 16.05.2023 DE 102023112945
(71) Anmelder: SICK AG, 79183 Waldkirch (DE)
(72) Erfinder: Zwölfer, Ulrich, 79183 Waldkirch (DE); Wülker, Fabian Tobias, 77793 Gutach (DE)

(57) **Zusammenfassung**

Optoelektronischer Sensor (1) zur Erfassung von Objekten (2) in einem Überwachungsbereich (3), mit einem Lichtsender (4) zum Aussenden von Sendelicht (5), mit einen Messlichtempfänger (6) zum Erzeugen eines Empfangssignals aus von Objekten (2) in dem Überwachungsbereich reflektiertem Sendelicht (5), mit einer Steuer- und Auswerteeinheit (8) zur Bestimmung von Informationen über Objekte (2) in dem Überwachungsbereich (3) anhand des Empfangssignals sowie mit einem oder mehreren optischen Elementen (9), welche im Strahlengang des Sendelichts (5) des Lichtsenders (4) derart angeordnet sind, dass ein Teil des Sendelichts (5) als Detektionslicht in den Überwachungsbereich (3) gelangt, wobei das optische Element (9) einen Teil des Sendelichts (5) auf einen Referenzlichtempfänger (11) leitet, wobei der Messlichtempfänger (6) und der Referenzlichtempfänger (11) auf einem Halbleiterbauelement (7) angeordnet sind, wobei das Halbleiterbauelement (7) auf einer Leiterplatte (14) angeordnet ist und der Referenzlichtempfänger (11) ausschließlich durch die der Leiterplatte (14) zugewandte Seite (15) des Halbleiterbauelements (7) mit dem Teil des Sendelichts (5) beleuchtet ist.

## Beschreibung

Die vorliegende Erfindung betrifft einen optoelektronischen Sensor gemäß dem Oberbegriff von Anspruch 1.

Optische Sensoren weisen meist einen Referenzkanal und einen Messkanal auf als sensitives Halbleiterbauelement (Chip) oder Halbleiterbauelemente. Die fehlerfreie Funktion des Halbleiterbauelements oder des Chips kann nur sichergestellt werden, wenn kein Licht vom Referenzkanal auf den Messkanal gelangt. Dies gilt insbesondere für kurze Laufzeiten, bei der Detektion von Targets mit geringem Abstand. Folglich ist eine optische Trennung zwischen den beiden Kanälen nötig.

Um den benötigen Bauraum und die Kosten zu reduzieren, ist das Halbleiterbauelement bzw. der Chip möglichst klein, wodurch die beiden optischen Flächen bzw. Kanäle nah beieinander liegen. Darüber hinaus werden Chips bzw. Halbleiterbauelemente mit Bonddrähten elektrisch angebunden, wodurch ein Verguss mit einem Verkapselungsmaterial für mikroelektronische Anwendungen (Glob Top) nötig wird, der geometrisch stark undefiniert ist. Daher ist es nur schwer bzw. im Extremfall nicht möglich eine Barriere unter wirtschaftlichen Randbedingungen zwischen den beiden Kanälen einzubringen.

Es gibt unterschiedliche Packages, die Trennungen zwischen Sender und Empfänger realisieren. In einigen Fällen befindet sich ein Referenzelement in der Kammer des Senders. Außerdem gibt es Packages, die Mess- und Referenzkanal in der gleichen Kammer, wie den Sender aufweisen. Diese ermöglichen jedoch erst Messungen ab einem bestimmten Abstand, da nach dem ersten Referenzpuls der Messkanal für einen kurzen Zeitraum blind für das vom Detektionsobjekt reflektierte Licht ist.

Eine Aufgabe der Erfindung besteht darin, einen verbesserten optoelektronischen Sensor bereitzustellen, der eine verbesserte optische Trennung zwischen Messlichtempfänger und Referenzlichtempfänger aufweisen soll.

Die Aufgabe wird gemäß Anspruch 1 gelöst durch einen optoelektronischen Sensor zur Erfassung von Objekten in einem Überwachungsbereich, mit einem Lichtsender zum Aussenden von Sendelicht, mit einem Messlichtempfänger zum Erzeugen eines Empfangssignals aus von Objekten in dem Überwachungsbereich reflektiertem Sendelicht, mit einer Steuer- und Auswerteeinheit zur Bestimmung von Informationen über Objekte in dem Überwachungsbereich anhand des Empfangssignals sowie mit mindestens einem optischen Element, welches im Strahlengang des Sendelichts des Lichtsenders derart angeordnet ist, dass ein Teil des Sendelichts als Detektionslicht in den Überwachungsbereich gelangt, wobei ein oder mehrere optische Elemente einen Teil des Sendelichts auf einen Referenzlichtempfänger leitet wobei der Messlichtempfänger und der Referenzlichtempfänger auf einem Halbleiterbauelement angeordnet sind, wobei das Halbleiterbauelement auf einer Leiterplatte angeordnet ist, und der Referenzlichtempfänger ausschließlich durch die der Leiterplatte zugewandten Seite des Halbleiterbauelements mit dem Teil des Sendelichts beleuchtet ist.

Die Steuer- und Auswerteeinheit ist dazu ausgebildet, anhand des Signals des Referenzlichtempfängers eine Referenzmessung durchzuführen.

Das Licht des Messlichtempfängers als Messkanal ist beispielsweise mit Störlicht beaufschlagt, jedoch das Referenzlicht des Referenzlichtempfängers als Referenzkanal nicht. Dadurch kann beispielsweise Störlicht durch den Sensor identifiziert werden.

Es müssen keine zwei Kammern mehr für die beiden Kanäle, also den Messlichtempfänger und den Referenzlichtempfänger auf einer Seite des Halbleiterbauelements bzw. Chips gebildet werden, sondern das Halbleiterbauelement selbst bzw. die Leiterplatte auf welcher das Halbleiterbauelement aufgebracht ist bildet nun die Trennung. Eine optische Trennung zwischen Messkanal und Referenzkanal bzw. zwischen Messlichtempfänger und Referenzlichtempfänger ist somit verbessert und vereinfacht.

Dadurch können auch Messungen von Objekten in geringem Abstand optisch durchgeführt werden. Gegenüber dem elektronischen Referenzsignal hat das optische Referenzsignal den Vorteil, dass dieses unabhängig von Alterungs- und Temperatureinflüssen und elektronischen Einflüssen ist. Folglich ist eine Abstandsbestimmung des Detektionsobjekts ohne Einfluss dieser Störgröße mit höherer Genauigkeit möglich.

Das Halbleiterbauelement ist dabei bedingt lichtdurchlässig, dass ein Teil des Sendelichts das Halbleiterbauelement durchdringen kann und auf die reaktive Fläche des Referenzlichtempfängers trifft. Die Richtung des Teiles des Sendelichts welches auf den Referenzlichtempfänger trifft ist dabei so gerichtet, dass lediglich der Referenzlichtempfänger getroffen wird und nicht der Messlichtempfänger.

Das Referenzlicht trifft ausreichend gerichtet auf den Siliziumkristall, dass nur die aktive Fläche des Referenzlichtempfängers beleuchtet wird. Die Lichtausbreitung im Siliziumkristall ist ausreichend gering, dass es nicht zu einem kritischen Auslösen des eigentlichen Messlichtempfängers kommt. Dies ist insbesondere gegeben, wenn das Halbleiterbauelement bzw. der Chip bzw. der Siliziumkristall dünn ist.

Das Halbleiterbauelement, bzw. der Chip wird beispielsweise als COB (Chip on Board) verbaut, d.h. es gibt beispielsweise kein Gehäuse, sondern der Siliziumkristall wird direkt auf die Leiterplatte geklebt. Der elektrische Kontakt wird mit Bonddrähten von den Landingpads auf dem Kristall zu den Landingpads auf der Leiterplatte hergestellt.

Für die rückseitige Beleuchtung können beispielsweise Wafer von typischerweise 725 µm auf bis zu 10 µm abgedünnt werden. Ein Optimum liegt hier z. B. für nahes Infrarotlicht (NIR, von ~ 850 nm bis 900 nm) bei ca. 50 µm.

Das Halbleiterbauelement kann beispielsweise auch Silizium-Durchkontaktierungen (eng. Through Silicon Vias, TSV) aufweisen. Unter dem Begriff Silizium-Durchkontaktierung versteht man in der Halbleitertechnik eine elektrische Verbindung aus zB. Kupfer, Wolfram oder ähnliche geeignete Metalle durch ein Silizium-Substrat (Wafer, Chip) beispielsweise dem Halbleiterbauelement. Die Silizium-Durchkontaktierungstechnologie ist eine vielversprechende Möglichkeit zur Realisierung elektrischer Verbindungen zwischen Chips bei der Integration von integrierten Schaltkreisen.

Die Leiterplatte selbst ist dabei unter dem Bereich des Referenzkanals zumindest bedingt lichtdurchlässig für den Teil des Sendelichts der auf den Referenzlichtempfänger gerichtet ist. Der Teil des Sendelichts durchleuchtet die Leiterplatte an der Stelle an der das Halbleiterbauelement mit dem Referenzlichtempfänger angeordnet ist.

Bei dem Sendelicht kann es sich beispielsweise um Infrarotlicht, sichtbares Rotlicht und auch beispielsweise bevorzugt um Laserlicht handeln.

In Weiterbildung der Erfindung sind der Messlichtempfänger und der Referenzlichtempfänger Lichtlaufzeitempfänger.

Gemäß der Weiterbildung kann der genaue Zeitpunkt des Aussendens von Licht an den Lichtsender durch den Referenzlichtempfänger festgestellt werden.

Gemäß der Weiterbildung ist der optoelektronische Sensor ein entfernungsmessender bzw. Lichttaster nach dem Lichtlaufzeitprinzip, wobei die Steuer- und Auswerteeinheit dafür ausgebildet ist, einen Objektabstand aus einer Lichtlaufzeit zwischen Aussenden des Sendelichts und Empfang des reflektierten Sendelichts zu bestimmen.

Dabei werden Lichtimpulse oder beispielsweise Lichtimpulsgruppen ausgesendet.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts. Mit der Referenzmessung wird der Zeitpunkt des Aussendens des Lichts bestimmt. Für die Lichtlaufzeitmessung ist es vorteilhaft, wenn eine optische Referenzmessung vorliegt, wodurch die Genauigkeit der Referenzmessung erhöht wird. Dazu wird das Licht durch das optische Element, bzw. den Lichtleiter ausgekoppelt und auf die Referenzdetektionsfläche des Referenzlichtempfängers geleitet. Damit kann die Lichtlaufzeit sehr genau bestimmt werden, da der exakte Zeitpunkt der Lichtaussendung und der genaue Zeitpunkt des Lichtempfangs der Steuer- und Auswerteeinheit bekannt sind.

Durch das optische Element wird das Licht in ausreichender Intensität auf den Referenzlichtempfänger geleitet, wodurch eine präzise und stabile Lichtlaufzeitmessung ermöglicht wird.

Der Messlichtempfänger ist beispielsweise ein Lawinenphotodiodenelement. Optional kann auch der Referenzlichtempfänger ein Lawinenphotodiodenelement sein.

Somit ist optional ein optoelektronischer Sensor gebildet zur Bestimmung der Entfernung eines Objekts in dem Überwachungsbereich nach einem pulsbasierten Lichtlaufzeitverfahren mit einem Lichtsender zum Aussenden eines Lichtpulses, mit einem Messlichtempfänger, wobei mindestens ein Lawinenphotodiodenelement als Messempfangselement ausgebildet ist und den von dem Objekt remittierten Lichtpuls empfängt und mindestens ein Lawinenphotodiodenelement als Referenzempfangselement ausgebildet ist und einen Teil des ausgesandten Lichtpulses innerhalb des Sensors als Referenzpuls empfängt sowie mit der Steuer- und Auswerteeinheit, die dafür ausgebildet ist, aus den Empfangssignalen des Messempfangselements und des Referenzempfangselements eine Lichtlaufzeit zwischen Aussenden des Lichtpulses und Empfangen des remittierten Lichtpulses und daraus den Abstand des Objekts zu bestimmen.

Der Messlichtempfänger kann auch als Einzelphotonenlawinendiode (Single Photon Avalanche Diode) ausgebildet sein, bzw. aus einem Array aus Einzelphotonenlawinendioden.

Einzelphotonenlawinendioden werden auch synonym als Single Photon Avalanche Diode` kurz SPAD bezeichnet. Andere gängige Bezeichnungen sind Silicon Photomultiplier` (SiPM), Geigermode Avalanche Photon Diode' oder ,Single Photon Counting Diode`. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Zur Entfernungsmessung sind verschiedene Lichtlaufzeitverfahren mit einer entsprechenden Auswertung implementierbar.

Beispielsweise arbeitet der Lichtlaufzeitsensor nach einem direkten Lichtlaufzeitverfahren (dTOF), wonach kurze Lichtpulse oder Lichtpulsgruppen ausgesandt werden und die Zeit bis zum Empfang einer Remission oder Reflexion der Lichtpulse an einem Objekt gemessen wird. Die Lichtsignale sind dabei durch Lichtpulse gebildet.

Die optische Distanzmessung für das direkten Lichtlaufzeitverfahren (dTOF, Direct Time of Flight) erfordert zum einen die zeitliche Erfassung des gesendeten Lichtpulses (z. B. Laserlicht) und andererseits die zeitliche Erfassung des von einem Objekt oder Target reflektierten Empfangslichtes. Bei SPAD dToF Systemen werden die ersten eintreffenden Photonen ausgewertet. Der Sendepuls zeigt oft eine Länge bis ca. 3 ns. In diesem Zeitfenster können beispielsweise überlagerte Empfangspulse über ca. ½ Meter nicht detektiert werden. Somit ist eine optische Entkopplung bzw. Trennung von Wichtigkeit und beide Ereignisse müssen unabhängig voneinander und ohne gegenseitige Beeinflussung erfasst werden können.

Jedoch sind auch andere Lichtlaufzeitverfahren möglich, beispielsweise das Phasenverfahren, wonach Sendelicht amplitudenmoduliert ist und eine Phasenverschiebung zwischen Sende- und Empfangslicht bestimmt wird, wobei die Phasenverschiebung ebenfalls ein Maß für die Lichtlaufzeit ist (indirektes Lichtlaufzeitverfahren, iTOF).

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden beispielsweise über ein Gating-Signal die Einzelphotonenevents in zwei Zähler verteilt und aus dem Verhältnis der Zählerstände eine Phase berechnet.

Bei dem mindestens einen Lichtsender handelt es sich bevorzugt um eine Laserdiode. Dabei handelt es sich beispielsweise um VCSEL Laserdioden, welche ein sehr gutes Preis-/Leistungsverhältnis aufweisen.

Es kann ein Pulsverfahren vorgesehen sein. Beispielsweise sind ein oder mehrere Zeitzu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Für die Lichtsender, beispielsweise ein VSCEL, eine Laserdiode oder eine Leuchtdiode sind die Steuer- und Auswerteeinheit ebenfalls im Empfangschip integrierbar.

Vorzugsweise ist das Sendelicht Laserlicht. Dadurch können kollimierte Lichtstrahlen erzeugt werden, die eine hohe Lichtenergie aufweisen und auf eine bestimmte Wellenlänge begrenzt sind.

In Weiterbildung der Erfindung ist die Steuer- und Auswerteeinheit dafür ausgebildet, die Lichtlaufzeit anhand der Referenzmessung beispielsweise aufgrund von Laufzeiten über Prozess, Temperatur und Spannung zu korrigieren, wodurch dann eine präzise Lichtlaufzeitmessung möglich ist. Der Referenzlichtpfad bzw. die Länge des Referenzlichtpfades ist bekannt, so dass zeitliche Verschiebungen aufgrund von genannten Driften erfasst und kompensiert werden können.

In Weiterbildung der Erfindung weist das optische Element einen transparenten Lichtleiter auf, der den Teil des Sendelichts auf einen Referenzlichtempfänger leitet.

Der Lichtleiter des optischen Elements kann in beliebiger Form ausgeführt sein, wodurch der Referenzlichtempfänger in verschiedenen Positionen angeordnet sein kann. Beispielsweise kann als Lichtleiter eine Glasfaser eingesetzt werden. Der transparente Lichtleiter liegt dabei beispielsweise senkrecht zur optischen Achse des Sendelichts. Ein Einkoppelelement des Lichtleiters liegt dabei im Bereich des Sendelichtstrahles. Ein Auskoppelbereich des Lichtleiters liegt dabei gegenüber der Empfangsfläche des Referenzlichtempfängers auf der Rückseite des Halbleiterbauelements. Der Lichtleiter basiert beispielsweise auf dem Effekt der Totalreflexion an den Grenzflächen. Nach dem Eintritt des Lichtes in den Lichtleiter wird das Licht mehrfach an den Grenzflächen beispielsweise total reflektiert und gelangt schließlich über den Auskoppelbereich auf den Referenzlichtempfänger. Jedoch kann auch eine Teilreflexion vorgesehen sein. Der Lichtleiter ist vorzugsweise scheibenförmig bzw. flach ausgebildet, wobei sich eine Hauptebene des scheibenförmigen bzw. flachen Lichtleiters vorzugsweise senkrecht zur optischen Achse des Sendelichts befindet.

Der Lichtleiter besteht aus einem für das Sendelicht transparenten Material, welches beispielsweise zur Grenzfläche Luft zur Totalreflexion führt. Beispielsweise besteht der Lichtleiter aus Kunststoff. Jedoch kann der Lichtleiter auch beispielsweise aus Glas bestehen.

Beispielsweise weist der Lichtleiter an einer Einkoppelstelle für das Sendelicht, geometrische, optische, diffraktive und/oder refraktive Strukturen auf. Diese Strukturen verbessern den Wirkungsgrad der Einkoppelstelle. Bei den geometrischen bzw. optischen Strukturen kann es sich um treppenartige Abstufungen oder beispielsweise Spiegelelemente handeln. Refraktive Strukturen können beispielsweise Linsenelemente aufweisen.

In Weiterbildung der Erfindung sind die optischen Elemente mehrere spiegelnde Flächen die einen Teil des Sendelichts auf einen Referenzlichtempfänger leiten. Spiegelnde Flächen haben den Vorteil, dass sich durch diese, nahezu beliebige Lichtwege realisieren lassen. Spiegelnde Flächen sind kostengünstig realisierbar und können in mechanischen Sensorbauteilen integriert werden.

In Weiterbildung der Erfindung weist das optische Element eine Blende mit einer Öffnung für das Sendelicht auf.

Um eine Blendenfunktion zu gewährleisten, befindet sich die Blende auf einer dem Lichtsender abgewandten Seite oder Fläche des optischen Elements. Die Blende ist ebenfalls vorzugsweis senkrecht zur optischen Achse des Sendelichts angeordnet. Die Blende besteht aus einem lichtundurchlässigen Material. Vorzugsweise weist die Blende eine reflektierende Oberfläche auf, welche zu dem Lichtsender hin angeordnet ist. Zwischen der Blende und dem Lichtsender ist der Lichtleiter angeordnet. Die Oberfläche des Lichtleiters kann im Bereich der Blende entsprechend ausgeformt sein, um eine Einkopplung eines Teils des Sendelichts in den Lichtleiter zu begünstigen. Durch die Blende werden Reflexe aus dem Lichtsender aufgefangen bzw. abgedeckt und aus dem Sendebereich ferngehalten. Weiter wird durch die Blende eine Beleuchtung von Randbereichen der Linse, insbesondere einer Kollimatorlinse verhindert, da diese Bereiche durch die Blende abgedeckt sind. Dadurch wird Streulicht und eine damit verbundene Verschlechterung des Lichtflecks vermieden.

Der Bauraum, um Licht aus dem Sendebereich auszukoppeln, ist minimiert und damit gering. Der Querschnitt des Sendelichtstrahls des Lichtsenders wird nicht negativ beeinflusst. Die Blende unterliegt keinen Beschränkungen durch den Lichtleiter, wodurch die Blendenfunktion uneingeschränkt gegeben ist. Das optische Element erfüllt gemäß der Weiterbildung die Blenden- und Lichtleiterfunktion. Dadurch ist ein Synergieeffekt erzielt. Dadurch wird die Anzahl der Teile verringert und die Montage des Sensors vereinfacht, wodurch der Sensor preiswerter herstellbar ist.

Durch eine optionale stoffschlüssige Verbindung zwischen Blende und Lichtleiter sind die Blende und der Lichtleiter bereits zueinander ausgerichtet und fixiert.

Beispielsweise ist die Öffnung der Blende eine kreisrunde Öffnung. Der Lichtquerschnitt von Lichtsendern, beispielsweise Leuchtdioden ist häufig oval, häufig mit Toleranzen behaftet oder beispielsweise häufig undefiniert in den Randbereichen. Durch die kreisrunde Öffnung der Blende wird ein kreisrunder Lichtstrahl erzeugt. Der kreisrunde Lichtstrahl wird beispielsweise über die Linse, bzw. die Kollimatorlinse auf ein Objekt projiziert. Der Lichtfleck auf dem Objekt wird wiederum auf dem Messlichtempfänger detektiert und führt zu einem Objektfeststellungssignal, welches durch die Steuer- und Auswerteeinheit generiert wird.

Beispielsweise ist das optische Element mit dem Lichtleiter und der Blende als Zweikomponenten-Spritzgussteil hergestellt. Dadurch kann das optische Element in einem Arbeitsschritt hergestellt werden, wodurch das optische Element sehr preiswert herstellbar ist.

Beispielsweise ist die Blende eine Blendenfolie oder eine Blechblende. Dabei sind der Lichtleiter und die Blendenfolie bzw. die Blechblende zwei Teile, die zusammengefügt werden. Dadurch können beispielsweise auch unterschiedliche Blenden und unterschiedliche Lichtleiter einfach miteinander kombiniert werden. Der Lichtleiter und die Blendenfolie bzw. die Blechblende können beispielsweise stoffschlüssig gefügt werden.

Beispielsweise ist die Blende eine lichtundurchlässige Beschichtung des Lichteiters. Dadurch kann die Blende sehr einfach realisiert werden. Im einfachsten Fall kann die Blende beispielsweise bedruckt, aufgedampft oder lackiert werden. Dadurch kann das optische Element sehr preiswert hergestellt werden. Dadurch, dass die Blende eine Beschichtung ist, kann die Blende und damit der Rand der Blende, welche die Öffnung der Blende bildet, sehr präzise ausgeführt werden. Der Rand der Blende weist dadurch auch eine spitze, kreisförmige Kante auf.

In Weiterbildung der Erfindung weist die Leiterplatte an der Stelle des Referenzlichtempfängers eine Öffnung auf. Beispielsweise weist die Leiterplatte eine Bohrung an der Stelle des Referenzlichtempfängers auf. Jedoch kann es beispielsweise auch vorgesehen sein, dass die Leiterplatte an der Stelle des Referenzlichtempfängers eine verringerte Stärke bzw. Dicke aufweist. Bei der Öffnung der Leiterplatte kann es sich beispielsweise, um einen hohlen Kontakt der Leiterplatte handeln, so dass eine zylindrische metallische Öffnung gebildet ist, wodurch quer zur Öffnung kein Licht austreten kann aufgrund des metallischen Mantels.

In Weiterbildung der Erfindung ist der transparente Lichtleiter in der Leiterplatte integriert. Der transparente Lichtleiter ist dabei beispielsweise auf der Oberfläche der Leiterplatte oder als integrierte Zwischenschicht der Leiterplatte integriert. Dabei bilden die Leiterplatte und der Lichtleiter beispielsweise ein einstückiges Bauteil.

In Weiterbildung der Erfindung ist der Referenzlichtempfänger auf dem Halbleiterbauelement auf der Seite, welcher der Leiterplatte abgewandt ist mit einem Vergussmittel vergossen.

Bei dem Verguss mit dem Vergussmittel handelt es sich beispielsweise um eine flexible und feste Verkapselung, die unter UV-Licht, sichtbarem Licht oder thermisch ausgehärtet freiliegende Bauteile, insbesondere den Referenzlichtempfänger oder den Messlichtempfänger schützt. Aber auch integrierte Schaltkreise oder Drahtverbindungen werden damit gesichert. Hierfür werden beispielsweise spezielle Klebstoffe eingesetzt.

Damit wird ein Schutz von besonders empfindlichen Bauteilen gegen Verkratzungen oder mechanische Belastung gebildet. Die eingesetzten Vergussmassen sind in der Regel UV-härtend. Je nach verwendetem Material kann die Aushärtung bereits innerhalb von wenigen Sekunden erfolgen. Die Versiegelung der Bauteile oder Komponenten kann vollautomatisiert erfolgen.

Vergussmassen, die thermisch aushärten, haben den Vorteil, dass sie auch dann aushärten, wenn kein Licht vorhanden ist, wie zum Beispiel in dunklen Räumen oder in Schattenzonen. Die Vergussmassen können nach erfolgter Aushärtung kurzfristig bis 280° C belastet werden. Dadurch überstehen diese schadlos einen Reflow-Prozess.

Die Vergussmasse verkapselt den Chip und stellt so sicher, dass empfindliche Drahtkontakte nicht abbrechen. Gleichzeitig erfolgt ein Schutz vor Verkratzungen, Feuchtigkeit und Staub.

Vergussmassen beispielsweise Glob Top gehört zu den Verfahren der Flüssigverkapselung. Das Ziel ist, bei Raumtemperatur elektronische Bauteile mit einer flüssigen Substanz zu schützen. Dafür sind keine produktspezifischen Werkzeuge erforderlich. Zum Einsatz kommen wahlweise ein- oder zweikomponentige Vergussmassen. Sie beruhen überwiegend auf Epoxidharz, Silikon, Polyurethanen oder Acrylat und härten thermisch aus. Meistens sind sie bereits vorgemischt. Häufig zum Einsatz kommen auch einkomponentige Polymersysteme. Sie haben den Vorteil, dass sie unter UV-Licht abbinden. Die Wahl des Materials muss so stattfinden, dass die Isolationseigenschaften und die elektronischen Anforderungen berücksichtigt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 4: jeweils einen optoelektronischen Sensor;
- Figur 5: ein Halbleiterbauelement in einer Draufsicht;
- Figur 6: einen Schnittdarstellung gemäß Figur 5;
- Figur 7: das Halbleiterbauelement gemäß Figur 5 in einer Querschnittsdarstellung;
- Figur 8: ein Halbleiterbauelement in einer Querschnittsseitenansicht.

In den nachfolgenden Figuren sind identische Teile mit identischen Bezugszeichen versehen.

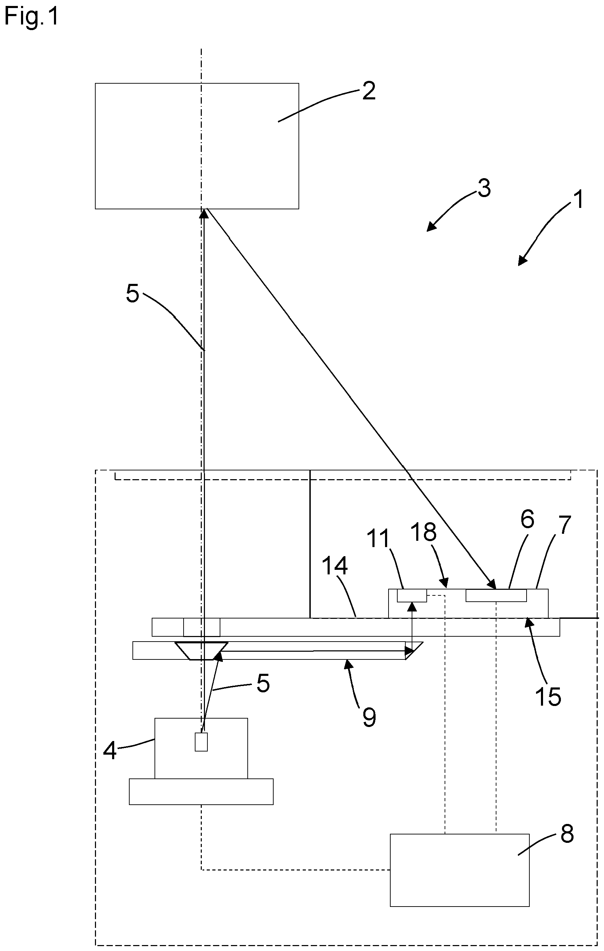

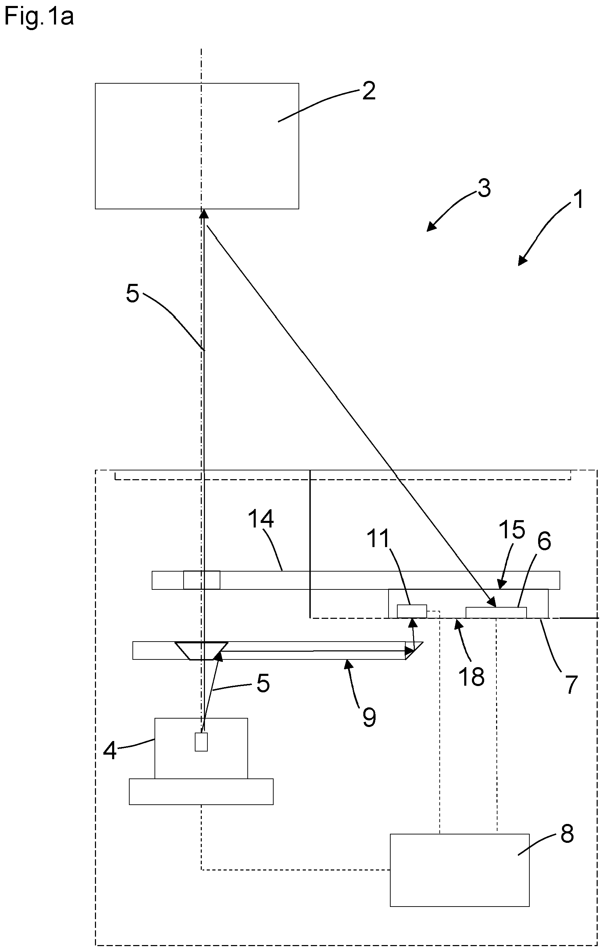

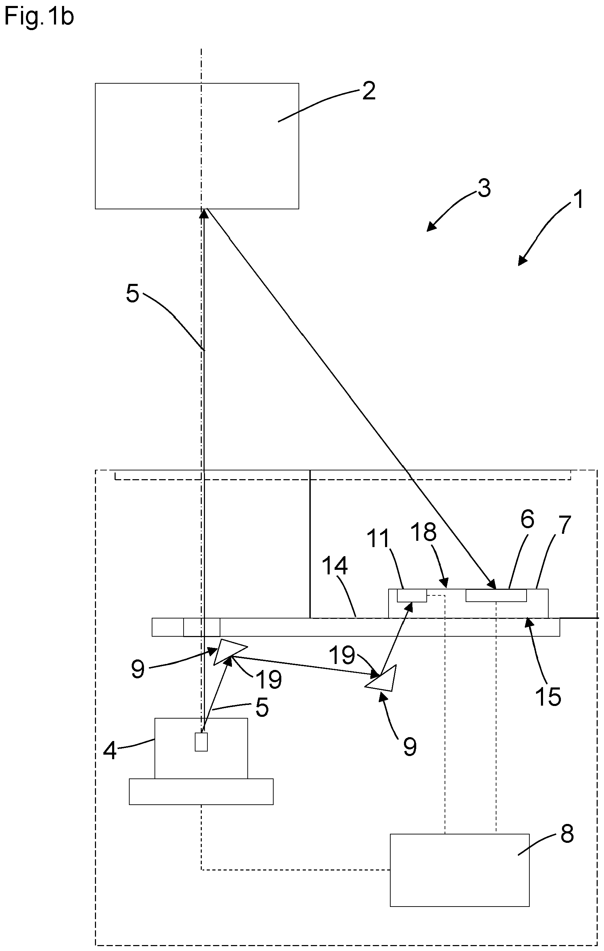

Figur 1 zeigt einen optoelektronischen Sensor 1 zur Erfassung von Objekten 2 in einem Überwachungsbereich 3, mit einem Lichtsender 4 zum Aussenden von Sendelicht 5, mit einen Messlichtempfänger 6 zum Erzeugen eines Empfangssignals aus von Objekten 2 in dem Überwachungsbereich 3 reflektiertem Sendelicht 5, mit einer Steuer- und Auswerteeinheit 8 zur Bestimmung von Informationen über Objekte 2 in dem Überwachungsbereich 3 anhand des Empfangssignals sowie mit mindestens einem optischen Element 9, welches im Strahlengang des Sendelichts 5 des Lichtsenders 4 derart angeordnet ist, dass ein Teil des Sendelichts 5 als Detektionslicht in den Überwachungsbereich 3 gelangt, wobei ein oder mehrere optische Elemente 9 einen Teil des Sendelichts 5 auf einen Referenzlichtempfänger 11 leitet wobei der Messlichtempfänger 6 und der Referenzlichtempfänger 11 auf einem Halbleiterbauelement angeordnet sind, wobei das Halbleiterbauelement auf einer Leiterplatte 14 angeordnet ist, und der Referenzlichtempfänger 11 ausschließlich durch die der Leiterplatte 14 zugewandten Seite des Halbleiterbauelements 7 mit dem Teil des Sendelichts 5 beleuchtet ist.

Der optoelektronische Sensor weist gemäß Figur 1 ein Sensorgehäuse 20 und eine Frontscheibe 21 auf. Im Innern des Sensorgehäuses 20 ist der Sensor beispielsweise in einen Senderaum 22 und einen Empfangsraum 23 getrennt aufgeteilt. Der Empfangsraum 23 ist optisch vom Senderaum 22 isoliert.

Die Steuer- und Auswerteeinheit 8 ist dazu ausgebildet, anhand des Signals des Referenzlichtempfängers 11 eine Referenzmessung durchzuführen. Die Steuer- und Auswerteeinheit 8 kann beispielsweise auch im Halbleiterbauelement 7 integriert sein.

Das Licht des Messlichtempfängers 6 als Messkanal ist beispielsweise mit Störlicht beaufschlagt, jedoch das Referenzlicht des Referenzlichtempfängers 11 als Referenzkanal nicht. Dadurch kann beispielsweise Störlicht durch den optoelektronischen Sensor 1 identifiziert werden.

Das Halbleiterbauelement 7 ist so weit lichtdurchlässig, dass ein Teil des Sendelichts 5 das Halbleiterbauelement 7 durchdringen kann und auf den Referenzlichtempfänger 11 trifft. Beispielsweise weist das Halbleiterbauelement 7 eine geringe Dicke auf von beispielsweise 10 µm bis 750 µm. Die Richtung des Teiles des Sendelichts 5 welches auf den Referenzlichtempfänger 11 trifft ist dabei so gerichtet, dass lediglich der Referenzlichtempfänger 11 getroffen wird und nicht der Messlichtempfänger 6.

Für die rückseitige Beleuchtung können beispielsweise Wafer von typischerweise 725 µm auf bis zu 10 µm abgedünnt werden. Ein Optimum liegt hier z. B. für NIR (~ 850 nm bis 900 nm) bei ca. 50 µm.

Die folgende Tabelle (Quelle: Hamamatsu) gibt eine Übersicht über die Eindringtiefe von Licht bei verschiedenen Wellenlängen in Silikonkristall als Halbleiterbauelement.

| **Wellenlänge (Nanometer** | **Eindringtiefe (Mikrometer)** |
|---|---|
| 400 | 0,19 |
| 450 | 1,0 |
| 500 | 2,3 |
| 550 | 3,3 |
| 600 | 5,0 |
| 650 | 7,6 |
| 700 | 8,5 |
| 750 | 16 |
| 800 | 23 |
| 850 | 46 |
| 900 | 62 |
| 950 | 150 |
| 1000 | 470 |
| 1050 | 1500 |
| 1100 | 7600 |

Das Halbleiterbauelement 7 ist dabei zwischen dem Messlichtempfänger 6 und dem Referenzlichtempfänger 11 vollständig oder nahezu undurchlässig für Licht. Dieses wird beispielsweise durch ein geringes Aspektverhältnis der Chiphöhe zum Abstand zwischen Messlichtempfänger 6 und Referenzlichtempfänger 11 erreicht.

Die Leiterplatte 14 selbst ist dabei teilweise lichtdurchlässig für den Teil des Sendelichts 5 das auf den Referenzlichtempfänger 11 gerichtet ist. Der Teil des Sendelichts 5 durchleuchtet die Leiterplatte 14 an der Stelle an der das Halbleiterbauelement 7 mit dem Referenzlichtempfänger 11 angeordnet ist. Die Lichtdurchlässigkeit wird z.B. durch eine Bohrung in der Leiterplatte erreicht.

Bei dem Sendelicht 5 kann es sich beispielsweise um Infrarotlicht, sichtbares Rotlicht und auch beispielsweise bevorzugt um Laserlicht handeln.

Figur 1a zeigt einen optoelektronischer Sensor 1 zur Erfassung von Objekten 2 in einem Überwachungsbereich 3, mit einem Lichtsender 4 zum Aussenden von Sendelicht 5, mit einem Messlichtempfänger 6 zum Erzeugen eines Empfangssignals aus von Objekten 2 in dem Überwachungsbereich reflektiertem Sendelicht 5, mit einer Steuer- und Auswerteeinheit 8 zur Bestimmung von Informationen über Objekte 2 in dem Überwachungsbereich 3 anhand des Empfangssignals sowie mit mindestens einem optischen Element 9, welches im Strahlengang des Sendelichts 5 des Lichtsenders 4 derart angeordnet ist, dass ein Teil des Sendelichts 5 als Detektionslicht in den Überwachungsbereich 3 gelangt, wobei ein oder mehrere optische Elemente 9 einen Teil des Sendelichts 5 auf einen Referenzlichtempfänger 11 leitet, wobei der Messlichtempfänger 6 und der Referenzlichtempfänger 11 auf einem Halbleiterbauelement 7 angeordnet sind, wobei das Halbleiterbauelement 7 auf einer Leiterplatte 14 angeordnet ist, und der Messlichtempfänger 11 ausschließlich durch die der Leiterplatte 14 zugewandte Seite 15 des Halbleiterbauelements 7 mit dem Teil des Sendelichts 5 beleuchtet ist.

Gemäß Figur 1b sind die optischen Elemente 9 mehrere spiegelnde Flächen 19 die einen Teil des Sendelichts 5 auf einen Referenzlichtempfänger 11 leiten. Mit den spiegelnden Flächen 19 wird das Signal bzw. ein Teil des Sendelichts 5 durch den Sensorinnenraum auf den Referenzlichtempfänger 11 gelenkt.

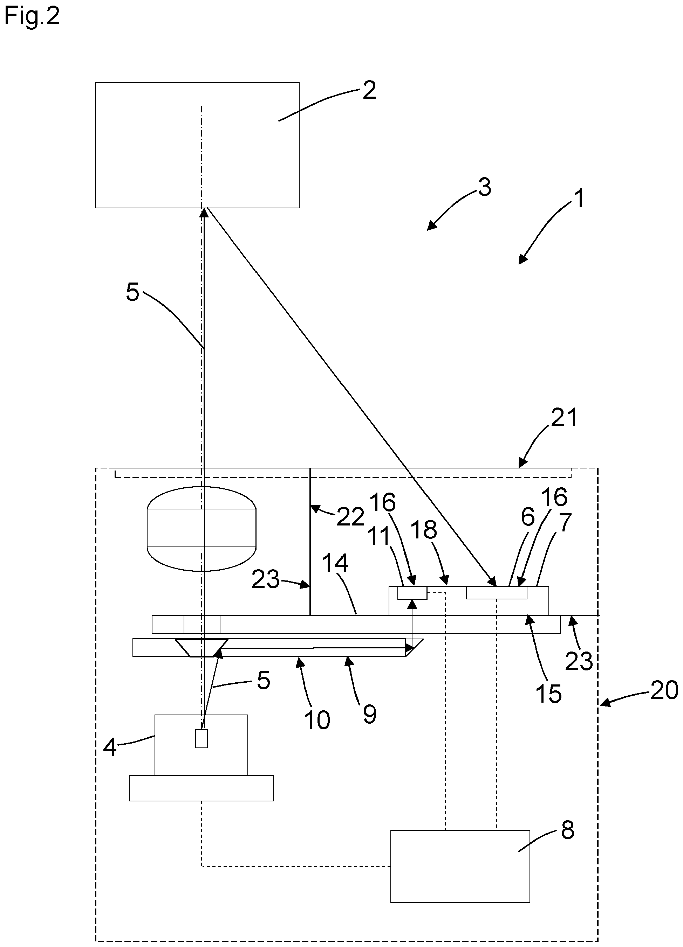

Gemäß Figur 2 sind der Messlichtempfänger6 und der Referenzlichtempfänger 11 Lichtlaufzeitempfänger 16.

Der optoelektronische Sensor 1 weist gemäß Figur 2 ein Sensorgehäuse 20 und eine Frontscheibe 21 auf. Im Innern des Sensorgehäuses ist der Sensor 1 beispielsweise in einen Senderaum 22 und einen Empfangsraum 23 getrennt aufgeteilt. Der Empfangsraum 23 ist optisch vom Senderaum 22 isoliert.

Durch den Lichtlaufzeitempfänger 16 kann der genaue Zeitpunkt des Aussendens von Sendelicht 5 an den Lichtsender 4 durch den Referenzlichtempfänger 11 festgestellt werden.

Gemäß Figur 2 ist der optoelektronische Sensor 1 ein entfernungsmessender Lichttaster nach dem Lichtlaufzeitprinzip, wobei die Steuer- und Auswerteeinheit 8 dafür ausgebildet ist, einen Objektabstand aus einer Lichtlaufzeit zwischen Aussenden des Sendelichts 5 und Empfang des reflektierten Sendelichts 5 zu bestimmen. Dabei werden Lichtimpulse oder beispielsweise Lichtimpulsgruppen ausgesendet.

Lichtlaufzeitmesssysteme ermöglichen die Entfernungsmessung durch Bestimmung der Zeitdifferenz zwischen Aussenden des Lichts und Zurückkommen des vom Messobjekt reflektierten Lichts. Mit der Referenzmessung wird der Zeitpunkt des Aussendens des Lichts bestimmt. Dazu wird das Sendelicht 5 durch das optische Element 9, bzw. den Lichtleiter 10 ausgekoppelt und auf die Referenzdetektionsfläche des Referenzlichtempfängers 11 geleitet. Damit kann die Lichtlaufzeit sehr genau bestimmt werden, da der exakte Zeitpunkt der Lichtaussendung und der genaue Zeitpunkt des Lichtempfangs der Steuer- und Auswerteeinheit 8 bekannt sind.

Durch das optische Element wird das Licht in ausreichender Intensität auf den Referenzlichtempfänger 11 geleitet, wodurch eine präzise und stabile Lichtlaufzeitmessung ermöglicht wird.

Der Messlichtempfänger 6 weist beispielsweise mindestens ein Lawinenphotodiodenelement auf. Optional kann auch der Referenzlichtempfänger 11 mindestens ein Lawinenphotodiodenelement aufweisen.

Somit ist gemäß Figur 2 optional ein optoelektronischer Sensor 1 gebildet zur Bestimmung der Entfernung eines Objekts 2 in dem Überwachungsbereich 3 nach einem pulsbasierten Lichtlaufzeitverfahren mit einem Lichtsender 4 zum Aussenden eines Lichtpulses, mit einem Messlichtempfänger 6, wobei mindestens ein Lawinenphotodiodenelement als Messempfangselement ausgebildet ist und den von dem Objekt remittierten Lichtpuls empfängt und mindestens ein Lawinenphotodiodenelement als Referenzempfangselement bzw. als Referenzlichtempfänger 11 ausgebildet ist und einen Teil des ausgesandten Lichtpulses innerhalb des Sensors 1 als Referenzpuls empfängt sowie mit der Steuer- und Auswerteeinheit 8, die dafür ausgebildet ist, aus den Empfangssignalen des Messempfangselements bzw. Messlichtempfängers 6 und des Referenzempfangselements bzw. des Referenzlichtempfängers 11 eine Lichtlaufzeit zwischen Aussenden des Lichtpulses und Empfangen des remittierten Lichtpulses und daraus den Abstand des Objekts 2 zu bestimmen.

Der Messlichtempfänger 6 kann auch als Einzelphotonenlawinendiode (Single Photon Avalanche Diode) ausgebildet sein, bzw. aus einem Array aus Einzelphotonenlawinendioden.

Bei dem mindestens einen Lichtsender 4 handelt es sich bevorzugt um eine Laserdiode. Dabei handelt es sich beispielsweise um VCSEL Laserdioden, welche ein sehr gutes Preis-/Leistungsverhältnis aufweisen.

Vorzugsweise ist das Sendelicht 5 Laserlicht. Dadurch können kollimierte Lichtstrahlen erzeugt werden, die eine hohe Lichtenergie aufweisen und auf eine bestimmte Wellenlänge begrenzt sind.

Beispielsweise ist die Steuer- und Auswerteeinheit 8 dafür ausgebildet, die Lichtlaufzeit anhand der Referenzmessung zu korrigieren, wodurch eine genauere Lichtlaufzeitmessung möglich ist. Der Referenzlichtpfad bzw. die Länge des Referenzlichtpfades ist bekannt, so dass zeitliche Verschiebungen aufgrund von Driften erfasst und kompensiert werden können. Die Steuer- und Auswerteeinheit 8 kann beispielsweise auch Bestandteil des Messlichtempfängers 6 oder des Referenzlichtempfängers 11 sein.

Gemäß Figur 2 weist das optische Element 9 einen transparenten Lichtleiter 10 auf, der den Teil des Sendelichts 5 auf einen Referenzlichtempfänger 11 leitet.

Der Lichtleiter 10 des optischen Elements 9 kann in beliebiger Form ausgeführt sein, wodurch der Referenzlichtempfänger 11 in verschiedenen Positionen angeordnet sein kann. Der transparente Lichtleiter 10 liegt dabei beispielsweise senkrecht zur optischen Achse des Sendelichts 5. Ein Einkoppelelement des Lichtleiters 10 liegt dabei im Bereich des Sendelichtstrahles. Ein Auskoppelbereich des Lichtleiters 10 liegt dabei gegenüber der Empfangsfläche des Referenzlichtempfängers 11 auf der Rückseite des Halbleiterbauelements 7. Der Lichtleiter 10 basiert beispielsweise auf dem Effekt der Totalreflexion an den Grenzflächen. Nach dem Eintritt des Lichtes in den Lichtleiter 10 wird das Licht mehrfach an den Grenzflächen beispielsweise total reflektiert und gelangt schließlich über den Auskoppelbereich auf den Referenzlichtempfänger 11. Jedoch kann auch eine Teilreflexion vorgesehen sein. Der Lichtleiter 10 ist vorzugsweise scheibenförmig bzw. flach ausgebildet, wobei sich eine Hauptebene des scheibenförmigen bzw. flachen Lichtleiters 10 vorzugsweise senkrecht zur optischen Achse des Sendelichts 5 befindet.

Der Lichtleiter 10 besteht aus einem für das Sendelicht 5 transparentem Material, welches beispielsweise zur Grenzfläche Luft zur Totalreflexion führt. Beispielsweise besteht der Lichtleiter 10 aus Kunststoff. Jedoch kann der Lichtleiter 10 auch beispielsweise aus Glas bestehen.

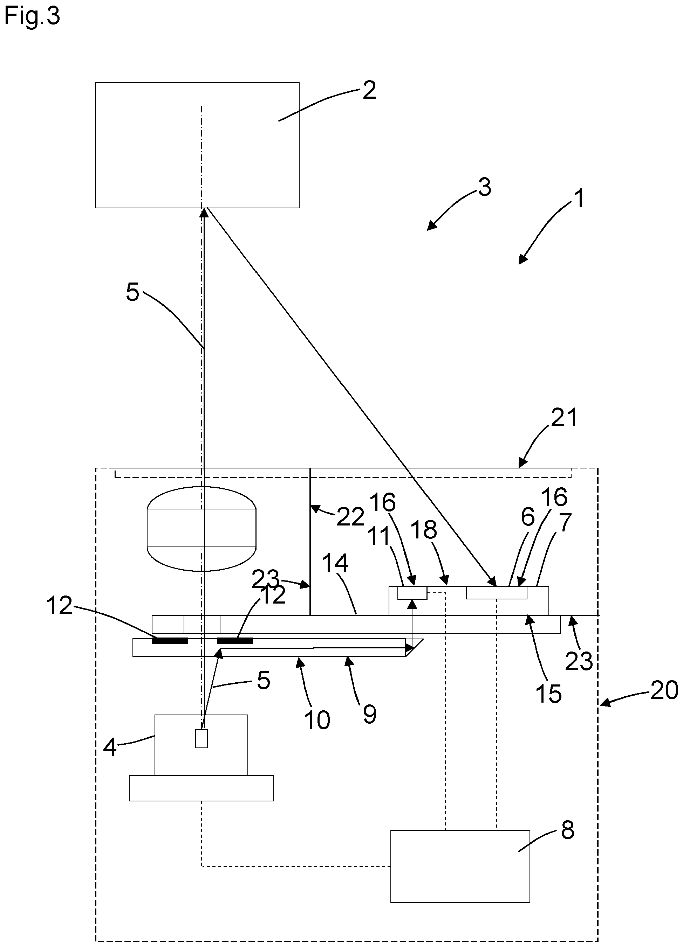

Beispielsweise weist das optische Element 9 gemäß Figur 3 eine Blende 12 mit einer Öffnung 13 für das Sendelicht 5 auf.

Um eine Blendenfunktion zu gewährleisten, befindet sich die Blende 12 auf einer dem Lichtsender 4 abgewandten Seite oder Fläche des optischen Elements 9. Die Blende 12 ist ebenfalls vorzugsweis senkrecht zur optischen Achse des Sendelichts 5 angeordnet. Die Blende 12 besteht aus einem lichtundurchlässigen Material. Vorzugsweise weist die Blende 12 eine reflektierende Oberfläche auf, welche zu dem Lichtsender 4 hin angeordnet ist. Zwischen der Blende 12 und dem Lichtsender 4 ist der Lichtleiter 10 angeordnet. Die Oberfläche des Lichtleiters 10 kann im Bereich der Blende 12 entsprechend ausgeformt sein, um eine Einkopplung eines Teils des Sendelichts 5 in den Lichtleiter 10 zu begünstigen.

Beispielsweise ist die Öffnung 13 der Blende 12 eine kreisrunde Öffnung 13. Durch die kreisrunde Öffnung 13 der Blende 12 wird ein kreisrunder Lichtstrahl erzeugt. Der kreisrunde Lichtstrahl wird beispielsweise über die Linse, bzw. die Kollimatorlinse auf ein Objekt 2 projiziert. Der Lichtfleck auf dem Objekt 2 wird wiederum auf dem Messlichtempfänger 6 detektiert und führt zu einem Objektfeststellungssignal, welches durch die Steuer- und Auswerteeinheit 8 generiert wird.

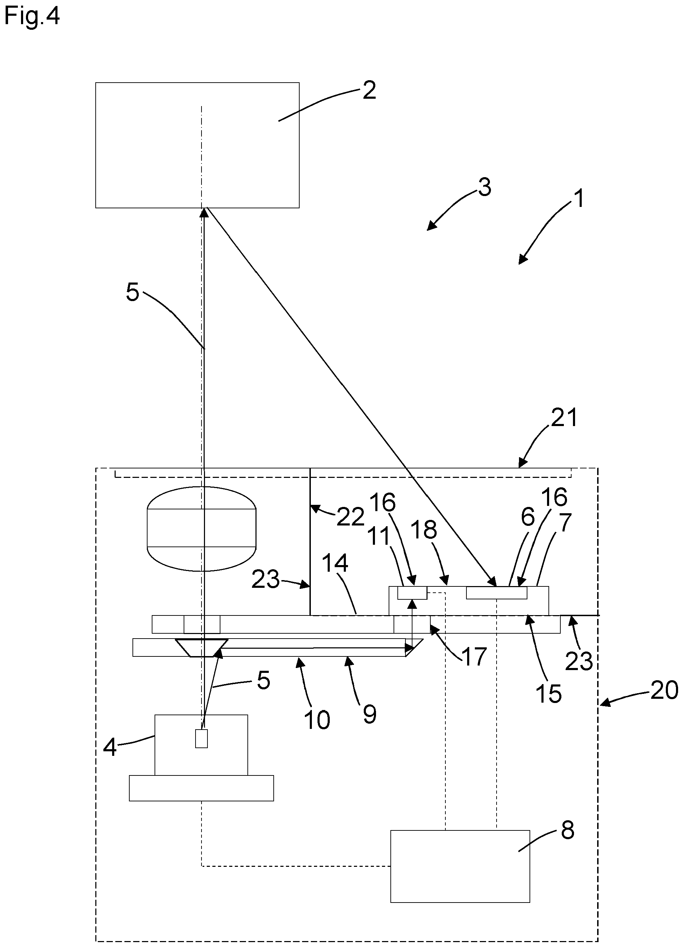

Gemäß Figur 4 weist die Leiterplatte 14 an der Stelle des Referenzlichtempfängers 11 eine Öffnung 17 auf. Beispielsweise weist die Leiterplatte 14 eine Bohrung an der Stelle des Referenzlichtempfängers 11 auf. Jedoch kann es beispielsweise auch vorgesehen sein, dass die Leiterplatte 14 an der Stelle des Referenzlichtempfängers 11 eine verringerte Stärke bzw. Dicke aufweist

Beispielsweise ist der transparente Lichtleiter 10 in der Leiterplatte 14 integriert. Der transparente Lichtleiter 14 ist dabei beispielsweise auf der Oberfläche der Leiterplatte 14 oder als integrierte Zwischenschicht der Leiterplatte 14 integriert. Dabei bilden die Leiterplatte 14 und der Lichtleiter 10 beispielsweise ein einstückiges Bauteil.

Beispielsweise ist der Referenzlichtempfänger 11 auf dem Halbleiterbauelement 7 auf der Seite, welche der Leiterplatte 14 abgewandt ist mit einem Vergussmittel vergossen.

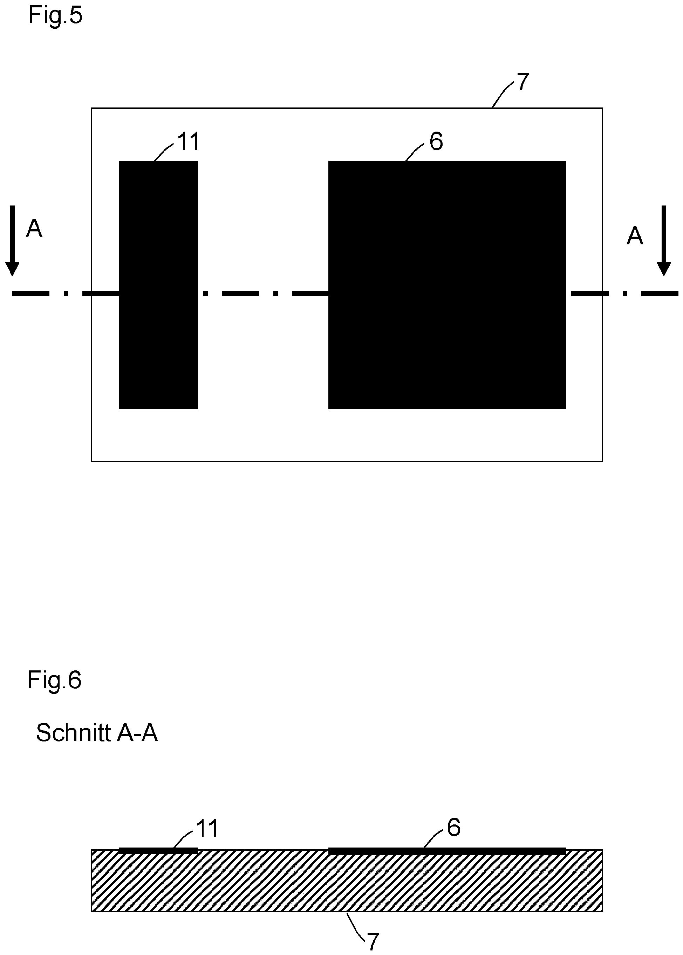

Figur 5 zeigt das Halbleiterbauelement 7 in einer Draufsicht mit dem Referenzlichtempfänger 11 und dem Messlichtempfänger 6. Das Halbleiterbauelement 7 ist beispielsweise ein Siliziumkristall.

Figur 6 zeigt das Halbleiterbauelement 7 gemäß Figur 5 in einer Querschnittsdarstellung entlang der Schnittlinie A-A mit dem Referenzlichtempfänger 11 und dem Messlichtempfänger 6.

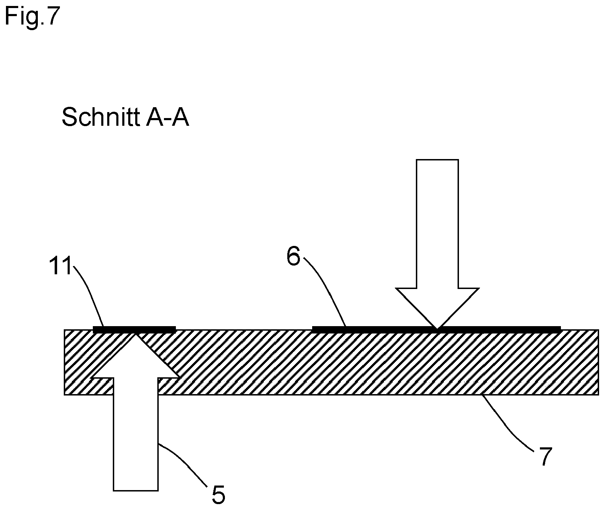

Figur 7 zeigt das Halbleiterbauelement 7 gemäß Figur 5 in einer Querschnittsdarstellung entlang der Schnittlinie A-A mit dem Referenzlichtempfänger 11 und dem Messlichtempfänger 6. Das Sendelicht 5 kommt als Referenzlicht direkt vom Lichtsender 4 auf den Referenzlichtempfänger über die Rückseite des Halbleiterbauelements 7. Das Messlicht, welches von einem Detektionsobjekt reflektiert wurde gelangt auf den Messlichtempfänger 6.

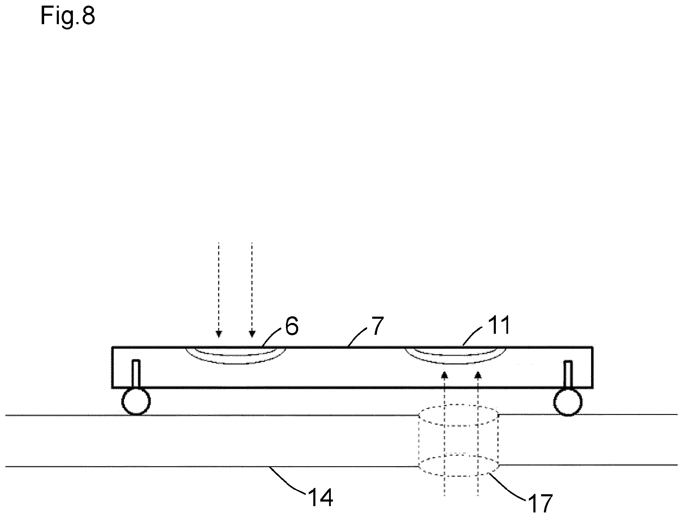

Figur 8 zeigt das Halbleiterbauelement 7 in einer Querschnittsseitenansicht mit dem Referenzlichtempfänger 11 und dem Messlichtempfänger 6. Das Halbleiterbauelement 7 ist beispielsweise ein Siliziumkristall.

Das Halbleiterbauelement 7, bzw. der Chip wird beispielsweise als COB (Chip on Board) verbaut. Somit wird die Kontaktierung über Bonddrähte realisiert, d.h. der Messlichtempfänger über eine Vorderseitenbeleuchtung (Front Side Illumination,FSI) und der Referenzlichtempfänger über eine Rückseitenbeleuchtung (Back Side Illumination,BSI) betrieben. Alternativ kann die Aufbau- und Verbindungstechnik über Through Silicon Vias (TSV) erfolgen. Ebenso können der Messlichtempfänger über eine Rückseitenbeleuchtung und der Referenzlichtempfänger über Vorderseitenbeleuchtung realisiert werden.

### Bezugszeichen:

1 Optoelektronischer Sensor
2 Objekt
3 Überwachungsbereich
4 Lichtsender
5 Sendelicht
6Messlichtempfänger
7 Halbleiterbauelement
8 Steuer- und Auswerteeinheit
9 optisches Element
10 transparenter Lichtleiter
11 Referenzlichtempfänger
12 Blende
13 Öffnung
14 Leiterplatte
15 Leiterplatte zugewandte Seite des Halbleiterbauelements
16 Lichtlaufzeitempfänger
17 Öffnung
18 Leiterplatte abgewandte Seite des Halbleiterbauelements
19 spiegelnde Flächen
20 Sensorgehäuse
21 Frontscheibe
22 Senderaum
23 Empfangsraum

## Patentansprüche

1. Optoelektronischer Sensor (1) zur Erfassung von Objekten (2) in einem Überwachungsbereich (3),
mit einem Lichtsender (4) zum Aussenden von Sendelicht (5),
mit einen Messlichtempfänger (6) zum Erzeugen eines Empfangssignals aus von Objekten (2) in dem Überwachungsbereich reflektiertem Sendelicht (5),
mit einer Steuer- und Auswerteeinheit (8) zur Bestimmung von Informationen über Objekte (2) in dem Überwachungsbereich (3) anhand des Empfangssignals
sowie mit mindestens einem optischen Element (9), welches im Strahlengang des Sendelichts (5) des Lichtsenders (4) derart angeordnet ist, dass ein Teil des Sendelichts (5) als Detektionslicht in den Überwachungsbereich (3) gelangt,
wobei ein oder mehrere optische Elemente (9) einen Teil des Sendelichts (5) auf einen Referenzlichtempfänger (11) leitet
**dadurch gekennzeichnet, dass**
der Messlichtempfänger (6) und der Referenzlichtempfänger (11) auf einem Halbleiterbauelement (7) angeordnet sind,
wobei das Halbleiterbauelement (7) auf einer Leiterplatte (14) angeordnet ist, und der Referenzlichtempfänger (11) ausschließlich durch die der Leiterplatte (14) zugewandte Seite (15) des Halbleiterbauelements (7) mit dem Teil des Sendelichts (5) beleuchtet ist.

2. Optoelektronischer Sensor (1) nach Anspruch 1, **dadurch gekennzeichnet, dass** der Messlichtempfänger (6) und der Referenzlichtempfänger (11) Lichtlaufzeitempfänger (16) sind.

3. Optoelektronischer Sensor (1) nach einem der vorhergehenden Ansprüche, **dadurch gekennzeichnet, dass** das optische Element (9) einen transparenten Lichtleiter (10) aufweist der den Teil des Sendelichts (5) auf einen Referenzlichtempfänger (11) leitet.

4. Optoelektronischer Sensor (1) nach einem der vorhergehenden Ansprüche, **dadurch gekennzeichnet, dass** die optischen Elemente mehrere spiegelnde Flächen (19) sind die einen Teil des Sendelichts (5) auf einen Referenzlichtempfänger (11) leiten.

5. Optoelektronischer Sensor (1) nach einem der vorhergehenden Ansprüche, **dadurch gekennzeichnet, dass** das optische Element (9) eine Blende (12) mit einer Öffnung (13) für das Sendelicht (5) aufweist.

6. Optoelektronischer Sensor (1) nach einem der vorhergehenden Ansprüche, **dadurch gekennzeichnet, dass** die Leiterplatte (14) an der Stelle des Referenzlichtempfängers (11) eine Öffnung (17) aufweist.

7. Optoelektronischer Sensor (1) nach Anspruch 3, **dadurch gekennzeichnet, dass** der transparente Lichtleiter (10) in der Leiterplatte (14) integriert ist.

8. Optoelektronischer Sensor (1) nach einem der vorhergehenden Ansprüche, **dadurch gekennzeichnet, dass** der Referenzlichtempfänger (11) auf dem Halbleiterbauelement (7) auf der Seite (18), welche der Leiterplatte (14) abgewandt ist mit einem Vergussmittel vergossen ist.
